# FASCICULE DE BREVET EUROPEEN

(11) **EP 3 000 106 B1**
(45) Date de publication et mention de la délivrance du brevet: **07.06.2017**
(21) Numéro de dépôt: 14720192.5
(22) Date de dépôt: 07.04.2014
(51) Int. Cl.: G09B 23/22, G01M 11/02, G02C 7/00

(54) **DEMONSTRATEUR DES QUALITES D'UN MATERIAU DE VERRE DE LUNETTES**
DEMONSTRATOR FÜR QUALITÄTEN EINES BRILLENGLASMATERIALS
DEMONSTRATOR OF QUALITIES OF A SPECTACLE LENS MATERIAL

(30) Priorité: 23.05.2013 FR 1354659
(43) Date de publication de la demande: 30.03.2016
(73) Titulaire: Essilor International (Compagnie Générale d'Optique), 94220 Charenton-le-Pont (FR)
(72) Inventeur: NADOLNY, Carole, F-94220 Charenton Le Pont (FR); CALANDRINI, Fabien, F-94220 Charenton Le Pont (FR)
(74) Mandataire: Chauvin, Vincent
(86) Numéro de dépôt international: PCT/FR2014/050830
(87) Numéro de publication internationale: WO 2014/188094

(56) Documents cités:
- WO-A1-2011/138536
- WO-A2-2009/153472
- DE-A1-102007 028 364
- FR-A1- 2 952 464
- US-A- 2 217 991
- US-A1- 2005 157 248

## Description

### DOMAINE TECHNIQUE AUQUEL SE RAPPORTE L'INVENTION

La présente invention concerne de manière générale le domaine de la lunetterie.

Elle concerne plus particulièrement un démonstrateur des qualités d'un matériau de verre de lunettes, comportant, d'une part, un socle creux ouvert par une fenêtre d'observation, et, d'autre part, une lentille qui ferme ladite fenêtre d'observation et qui comporte une partie réalisée dans ledit matériau de verre de lunettes.

Elle concerne également des procédés d'utilisation d'un tel démonstrateur, permettant de prouver de manière visuelle la qualité d'un matériau de verre de lunettes, en le comparant avec un autre matériau de verre de lunettes.

### ARRIERE-PLAN TECHNOLOGIQUE

De manière générale, un verre de lunettes, qu'il soit minéral ou organique, subit des traitements destinés à améliorer ses propriétés techniques.

Un tel verre de lunettes peut ainsi recevoir :
- un traitement antisalissure destiné à atténuer les traces de doigts laissées par l'utilisateur sur le verre de lunettes ;
- un traitement antistatique destiné à réduire la quantité de particules de poussières venant adhérer au verre de lunettes par électricité statique ;
- un traitement hydrophobe destiné à réduire la quantité de buée venant se déposer sur le verre de lunettes et à permettre aux gouttes de pluie de perler plus rapidement sur le verre de lunettes ;
- un traitement antireflet destiné à réduire les reflets venant perturber la vision du porteur de lunettes ;
- un traitement anti-abrasion destiné à accroître la durabilité du verre de lunettes ;
- un traitement anti-ultraviolets destiné à filtrer les ultraviolets néfastes aux yeux du porteur de lunettes.

Pour permettre à un opticien ou à un acquéreur de lunettes d'apprécier les propriétés antistatiques d'un matériau de verres de lunettes, on connaît du document FR2893748 un démonstrateur se présentant sous la forme d'une boîte transparente qui présente deux ouvertures et qui loge des billes de polystyrène expansé. Deux lentilles aux propriétés antistatiques différentes sont placées dans les deux ouvertures de la boîte.

Ce démonstrateur permet ainsi, lorsqu'on le secoue, d'observer le nombre de billes venant adhérer à chacune des lentilles et donc de comparer les propriétés antistatiques de ces deux lentilles.

L'inconvénient majeur de ce démonstrateur est qu'il ne permet d'observer qu'un seul type de propriétés du matériau de verre de lunettes (ici ses propriétés antistatiques).

L'opticien est alors forcé d'acquérir d'autres démonstrateurs pour permettre à l'acquéreur de lunettes de visualiser les autres propriétés du matériau de verre de lunettes.

On connait par ailleurs du document US2217991 un démonstrateur permettant de révéler les propriétés anti-UV d'un traitement de lentille. Dans ce document, le démonstrateur comporte un boîtier qui présente une fenêtre d'observation au travers de laquelle l'usager peut observer deux amas de particules fluorescentes. Ces amas sont situés au-dessus de deux lentilles qui ont subi des traitements anti-UV différents et qui sont éclairées par le dessous par deux lampes à UV. Ce démonstrateur permet de mettre en évidence l'efficacité d'un traitement anti-UV, en comparant l'intensité du scintillement des deux amas.

On connait aussi du document WO2009/153472 un démonstrateur permettant de révéler les propriétés anti-abrasion d'un traitement. Dans ce document, le dispositif comporte simplement une plaque repliée en U, dont une partie forme un support à poser sur une table et dont l'autre partie présente une fenêtre dans laquelle peut être positionnée une lentille rayée. Ce démonstrateur n'est toutefois pas équipe de moyen pour rayer la lentille, cette dernière devant auparavant subir un test de résistance à l'abrasion sur une machine dédiée.

### OBJET DE L'INVENTION

Afin de remédier à l'inconvénient précité de l'état de la technique, la présente invention propose un démonstrateur tel que défini dans la revendication 1.

D'autres caractéristiques avantageuses et non limitatives du démonstrateur conforme à l'invention sont définies dans les revendications 2 à 7.

L'invention propose également des procédés d'utilisation d'un tel démonstrateur, définis dans les revendications 8 et suivantes.

### DESCRIPTION DETAILLEE D'UN EXEMPLE DE REALISATION

La description qui va suivre en regard des dessins annexés, donnés à titre d'exemple non limitatif, fera bien comprendre en quoi consiste l'invention et comment elle peut être réalisée.

Sur les dessins annexés :
- la figure 1 est une vue schématique en perspective d'un démonstrateur selon l'invention ; et
- la figure 2 est une vue schématique en perspective d'une variante de réalisation du démonstrateur de la figure 1.

En préliminaire, on définit un verre de lunettes comme étant un verre transparent, adapté à être monté sur une monture de lunettes. Il peut notamment s'agir d'un verre de lunettes ophtalmique ou d'un verre de lunettes de soleil.

De manière générale, un verre de lunettes comporte un substrat minéral ou organique qui subit des traitements destinés à améliorer ses propriétés techniques.

Ces traitements servent à améliorer les propriétés mécaniques du substrat et/ou à déposer sur ce substrat un revêtement approprié.

Un verre de lunettes peut ainsi recevoir l'un et/ou l'autre des traitements suivants :
- un traitement antisalissure destiné à atténuer les traces de doigts laissées par l'utilisateur sur le verre de lunettes ;
- un traitement antistatique destiné à réduire la quantité de particules de poussières venant adhérer au verre de lunettes par électricité statique ;
- un traitement hydrophobe (encore appelé « déperlant » ou « anti-pluie ») destiné à réduire la quantité de buée venant se déposer sur le verre de lunettes et à permettre aux gouttes de pluie de perler plus rapidement sur le verre de lunettes ;
- un traitement antireflet destiné à réduire les reflets venant perturber la vision du porteur de lunettes ;
- un traitement anti-abrasion destiné à accroître la durabilité du verre de lunettes ;
- un traitement anti-ultraviolets destiné à filtrer la lumière ultraviolette qui est néfaste aux yeux du porteur de lunettes.

Ici, on considérera un verre de lunettes ayant reçu l'ensemble de ces traitements.

La présente invention porte alors sur un démonstrateur permettant de rendre visible, à l'oeil nu, l'efficacité de deux au moins de ces traitements.

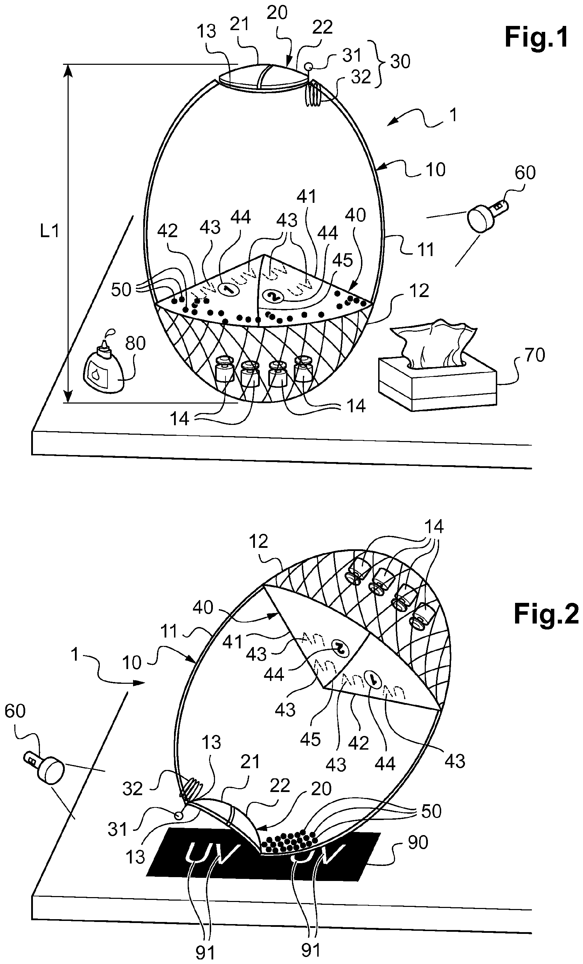

Comme le montre la figure 1, ce démonstrateur 1 comporte un socle creux 10 ouvert par une fenêtre d'observation 13. Il comporte également une lentille 20 qui est fixée dans ladite fenêtre d'observation 13 et qui comporte au moins une partie 21 transparente réalisée dans le même matériau que le verre de lunettes considéré.

L'utilisateur de ce démonstrateur 1 peut ainsi regarder à l'intérieur du socle creux 10, au travers de la partie 21 de la lentille 20.

Dans la suite de la description, les termes « avant » et « arrière » seront utilisés par rapport à la direction du regard de l'utilisateur au travers de cette lentille 20. L'avant d'un élément désignera alors le côté de cet élément qui est tourné vers l'utilisateur et l'arrière désignera le côté opposé de cet élément.

Selon une caractéristique particulièrement avantageuse de l'invention, le démonstrateur 1 comporte au moins deux moyens de démonstration distincts choisis dans la liste suivante :
- un élément électrostatique 50 qui est logé librement dans le socle creux 10 et qui est susceptible de se déplacer sous l'action d'une attraction électrostatique,
- une marque ultraviolette 43 qui est située dans le socle creux 10 de manière à être observable au travers de ladite lentille 20 et qui permet de révéler à l'oeil nu un éclairage par lumière ultraviolette,
- un élément abrasif 30 qui est monté mobile sur le socle creux 10 et qui est adapté à venir rayer ladite lentille 20.

En l'espèce, le démonstrateur 1 comporte les trois moyens de démonstration précités. Il permet ainsi de rendre visible, à l'oeil nu, l'efficacité de l'ensemble des traitements du matériau du verres de lunettes considéré.

Comme le montre bien la figure 1, le socle creux 10 présente ici une forme ovoïdale, avec une extrémité avant dans laquelle est située la fenêtre d'observation 13 et une extrémité arrière qui est lestée.

La fenêtre d'observation 13 présente une forme circulaire et est centrée sur l'extrémité avant du socle creux 10.

Le lest 14 est quant à lui constitué d'une charge ou d'un poids, par exemple en plomb ou en résine durcissable, fixé à l'intérieur du socle creux 10. Ainsi, le socle creux 10 se comporte à la manière d'un Culbuto^{®} qui permet à la fenêtre d'observation 13 de revenir automatiquement vers le haut.

Ce socle creux 10 est ici constitué d'un corps 11 qui est réalisé en matière transparente, ici en plastique, et d'une couche souple 12 qui recouvre l'extrémité arrière du corps 11 et qui est ici réalisé en silicone. Cette couche souple 12 permet de protéger le corps 11 des chocs et de cacher esthétiquement le lest 14.

La lentille 20, qui ferme la fenêtre d'observation 13, est ici entièrement transparente.

Elle est ici constituée de deux parties 21, 22 distinctes, dont une partie 21 réalisée dans le matériau du verre de lunettes considéré, et une partie 22 réalisée dans un autre matériau.

Ces deux matériaux pourront par exemple correspondre à deux générations différentes de matériaux de verres de lunettes.

Comme le montre la figure 1, les deux parties 21, 22 de la lentille 20 sont formées de deux demi-verres de lunettes assemblés.

La lentille 20 est ainsi obtenue par découpe de deux verres de lunettes initialement circulaires et présentant des caractéristiques géométriques identiques, puis par collage de ces deux demi-verres de lunettes au niveau de leur tranche de découpe.

La lentille 20 présente ici un diamètre identique à celui de la fenêtre d'observation 13 et est conçue pour que sa face avant convexe ou sa face arrière concave s'étende dans le prolongement de la face externe du socle creux 10.

Ici, le socle creux 10 comporte intérieurement un écran 40 qui permet de cacher esthétiquement le lest 14 lorsque l'utilisateur du démonstrateur 1 regarde à l'intérieur du socle creux 10, au travers de la lentille 20.

Cet écran 40 présente une forme de cône de révolution, dont la base circulaire est fixée à la face interne du corps 11 du socle creux 10, à hauteur du bord avant de la couche souple 12, et dont le sommet est orienté vers l'avant.

La forme du cône permet aussi de répartir les éléments électrostatiques 50 à la périphérie de l'écran 40, rendant ce dernier visible et lisible.

L'écran 40 est ici réalisé d'une seule pièce en papier Bristol de couleur blanche.

Il présente sur sa face avant différentes inscriptions 43, 44, 45.

Une première inscription, imprimée à l'encre noire, forme une ligne séparatrice 45 qui passe par le sommet du cône et qui sépare la face avant de l'écran 40 en deux parties 41, 42 égales.

Cette ligne séparatrice 45 est orientée de la même manière que le bord de jonction des deux parties 21, 22 de la lentille 20. De cette manière, lorsqu'il regarde à l'intérieur du socle creux 10, l'utilisateur voit chaque partie 41, 42 de l'écran 40 au travers de chaque partie 21, 22 de la lentille 20.

On dit alors que chaque partie 41, 42 de l'écran 40 est associée à une partie 21, 22 de la lentille 20.

Les secondes inscriptions 44, imprimées à l'encre noire sur l'écran 40, de part et d'autre de la ligne séparatrice 45, sont des références qui permettent de distinguer les deux parties 41, 42 de l'écran 40. Ici, ces références sont formées par des chiffres « 1 » et « 2 ». En pratique, ces références seront plutôt formées par les noms des matériaux des verres de lunettes utilisés pour fabriquer les deux parties 21, 22 de la lentille 20.

Ainsi, chaque partie 41, 42 de l'écran 40 portera le nom du matériau utilisé pour fabriquer la partie 21, 22 de la lentille 20 à laquelle elle est associée.

Les troisièmes inscriptions, imprimées à l'encre ultraviolette sur l'écran 40, sont ici formées d'une pluralité de couples de lettres « UV ». Ces troisièmes inscriptions correspondent aux marques ultraviolettes 43 précitées. Elles sont réparties sur l'écran 40, de part et d'autre de la ligne séparatrice 41.

Par « encre ultraviolette », on entend un colorant invisible à l'oeil nu, mais qui se révèle lorsqu'il est éclairé par une source de lumière ultraviolette de longueur d'onde comprise entre 230 et 380 nm.

Comme cela sera exposé dans la suite, ces marques ultraviolettes 43 permettront de déterminer laquelle des deux parties 21, 22 de la lentille 20 filtre le mieux la lumière ultraviolette qui, comme on le sait bien, est néfaste aux yeux humains.

Ici, comme le montre la figure 1, il est prévu plus de trois éléments électrostatiques 50. En pratique, il en est ici prévu une vingtaine au moins.

Les éléments électrostatiques 50 doivent être suffisamment légers pour être susceptibles de se déplacer sous l'action d'une force d'attraction électrostatique.

De nombreux éléments électrostatiques 50 peuvent être utilisés selon l'invention, leur permittivité électrique, leur taille ou leur masse volumique devant être adaptées de manière à ce que l'attraction électrostatique exercée sur eux par un corps chargé placé à proximité soit supérieure à la gravité.

De préférence, on utilise des éléments électrostatiques 50 ayant une permittivité électrique relative inférieure à 6 pF/m, préférentiellement comprise entre 0,5 et 5 pF/m, et encore préférentiellement comprise entre 1 et 4 pF/m. Ces valeurs de permittivité s'entendent à une température de 23°C et à un taux d'humidité de 50 %. De préférence encore, on utilise des éléments électrostatiques 50 ayant une masse volumique inférieure à 150 g/L, préférentiellement inférieure à 100g/L, et encore préférentiellement comprise entre 10 et 20 g/L. Les masses volumiques sont mesurées à température ambiante.

Parmi les éléments électrostatiques 50 correspondant aux critères de permittivité et de masse volumique définis précédemment, on peut citer la poussière en suspension, le talc en poudre, les carrés de feuilles d'aluminium de faibles dimensions, les morceaux ou fibres de papier de faibles dimensions, les particules alvéolaires de polymères synthétiques ou naturels ou les fibres individualisées de polymères synthétiques ou naturels. Les particules alvéolaires de polymères ou les fibres individualisées de polymères précités peuvent éventuellement être chargés en noir de carbone.

Par "particules alvéolaires", on entend des particules dont la structure contient des alvéoles.

Les particules alvéolaires de polymères sont préférentiellement choisies parmi les mousses et billes de polymères expansés, de préférence parmi les mousses et billes de polymères expansés de polyéthylène, polychlorure de vinyle, polystyrène, acrylonitrile-butadiène-styrène (ABS), polyuréthane et leurs mélanges.

Dans le mode de réalisation de l'invention représenté sur la figure 1, les éléments électrostatiques sont des billes de polystyrène expansé 50 sphériques ou pseudo sphériques, de diamètre inférieur à 8 mm, de préférence compris entre 0,5 et 5 mm, préférentiellement entre 0,5 et 3 mm.

Les billes de polystyrène expansé 50 sont blanches de nature. Elles peuvent cependant être colorées de manière à être mieux visibles sur l'écran 40 blanc. Elles peuvent être colorées dans la masse ou bien juste en surface avec différentes couleurs fluorescentes ou non.

Ici, une partie des billes de polystyrène expansé 50 sera colorée en noir, tandis que l'autre partie de ces billes de polystyrène expansé 50 sera colorée à l'encre ultraviolette.

Comme cela sera exposé dans la suite, ces billes de polystyrène expansé 50 permettront de déterminer laquelle des deux parties 21, 22 de la lentille 20 présente le meilleur traitement antistatique.

L'élément abrasif 30, qui est monté mobile sur le socle creux 10 de manière à pouvoir rayer la lentille 20, comporte ici un ressort 32 et une tige de manoeuvre 31.

Le ressort 32 est situé à l'intérieur du socle creux 10, en appui contre la face interne de la lentille 20.

La tige de manoeuvre 31 est fixée par son extrémité arrière au ressort 32. Elle fait saillie à l'avant de la lentille 20, au travers d'une rainure qui est pratiquée dans le socle creux 10 et qui longe en partie le bord de la lentille 20.

L'utilisateur du démonstrateur 1 peut ainsi manipuler la tige de manoeuvre 31 de manière à faire glisser le ressort 32 contre les faces internes des deux parties 21, 22 de la lentille 20.

Comme cela sera exposé dans la suite, cet élément abrasif 30 permettra de déterminer laquelle des deux parties 21, 22 de la lentille 20 est la moins sensible aux rayures.

Comme le montre la figure 1, le démonstrateur 1 présente une plus grande dimension L1 inférieure à 75 cm (ici égale à 20 cm environ) et un poids inférieur à 10 kg (ici égal à 500 g environ), de manière à être facilement transportable.

Ce démonstrateur 1 est préférentiellement livré et utilisé avec différents accessoires 60, 70, 80.

Il est notamment livré avec un flacon 80 contenant un liquide permettant de comparer les propriétés hydrophobes des deux parties 21, 22 de la lentille 20. Ici, ce flacon 80 contient de l'eau.

Il est également livré avec une réserve de feuilles 70 adaptées à essuyer la lentille 20. Cette réserve de feuilles 70 pourra par exemple être constituée d'un paquet de mouchoirs en papier ou en tissu.

Le démonstrateur 1 est enfin livré avec une source de lumière ultraviolette.

De nombreuses sources de lumière ultraviolette appropriées sont disponibles commercialement. Ici, il s'agit d'une lampe UV de type porte-clefs.

Le démonstrateur 1 pourra alors être utilisé de la manière suivante.

Au cours d'une première étape, l'utilisateur pourra chercher à comparer les propriétés antisalissures des deux parties 21, 22 de la lentille 20.

Pour cela, il déposera une empreinte de doigt sur chacune des parties 21, 22 de la lentille 20 et il observera sur laquelle des deux parties 21, 22 de la lentille 20 son doigt a laissé l'empreinte la moins visible. Cette partie 21, 22 de la lentille 20 sera celle qui présente le traitement antisalissure le plus performant.

Il pourra ensuite prendre un mouchoir pour nettoyer la lentille 20. Il observera alors que la partie de la lentille 20 présentant le traitement antisalissure le plus performant sera celle qui se nettoie le plus facilement.

Le seul fait de nettoyer la lentille 20 aura pour effet de créer de l'électricité statique dans chacune des parties 21, 22 de cette lentille 20, en quantité plus ou moins grande selon le traitement antistatique utilisé.

Alors, au cours d'une seconde étape, l'utilisateur pourra chercher à comparer les propriétés antistatiques des deux parties 21, 22 de la lentille 20.

Pour cela, il retournera le démonstrateur 1 de telle manière que les billes de polystyrène expansé 50 se répartissent sur chaque partie 21, 22 de la lentille 20, puis il remettra le démonstrateur 1 en position initiale. Il observera ensuite sur laquelle des deux parties 21, 22 de la lentille 20 le plus petit nombre de billes de polystyrène expansé 50 restent accrochées, cette partie 21, 22 de la lentille 20 étant celle qui présente le traitement antistatique le plus performant.

Au cours d'une troisième étape, l'utilisateur pourra chercher à comparer les propriétés hydrophobes des deux parties 21, 22 de la lentille 20.

Pour cela, il versera à l'aide du flacon 80 une goutte d'eau sur chacune des parties 21, 22 de la lentille 20, il inclinera le démonstrateur 1 de 45 degrés environ, et il observera sur laquelle des deux parties 21, 22 de la lentille 20 ladite goutte glissera le plus rapidement, en laissant le moins de trace. Cette partie 21, 22 de la lentille 20 sera celle qui présente le traitement hydrophobe le plus performant.

Il pourra ensuite prendre un mouchoir pour nettoyer la lentille 20.

Au cours d'une quatrième étape, l'utilisateur pourra chercher à comparer les propriétés antireflet des deux parties 21, 22 de la lentille 20.

Pour cela, il regardera au travers des deux parties 21, 22 de la lentille 20, vers le fond du socle creux 10, et il comparera la facilité de lecture des secondes inscriptions 42 prévues sur l'écran 40 (malgré les reflets). La partie 21, 22 de la lentille 20 au travers de laquelle la lecture des secondes inscriptions 42 sera la plus facile correspondra à celle qui présente le traitement antireflet le plus performant.

Au cours d'une cinquième étape, l'utilisateur pourra chercher à comparer les propriétés anti-abrasion des deux parties 21, 22 de la lentille 20.

Pour cela, il passera l'élément abrasif 30 sur chacune des parties 21, 22 de la lentille 20 et il observera laquelle des deux parties 21, 22 de la lentille 20 présente les rayures les moins apparentes. Cette partie 21, 22 de la lentille 20 sera celle qui présente le traitement anti-abrasion le plus performant.

Au cours d'une sixième et ultime étape, l'utilisateur pourra chercher à comparer les propriétés anti-ultraviolets des deux parties 21, 22 de la lentille 20.

Pour cela, il éclairera avec la lampe UV 60 les marques ultraviolettes 43 et les billes de polystyrène expansé 50 au travers de l'une puis de l'autre des deux parties 21, 22 de la lentille 20. Il observera alors que les marques ultraviolettes 43 et les billes de polystyrène expansé 50 seront moins visibles lorsqu'ils seront éclairés au travers d'une première des deux parties 21, 22 de la lentille 20 par rapport à lorsqu'elles sont éclairées au travers de l'autre partie 21, 22 de la lentille 20. Cette première partie 21, 22 de la lentille 20 sera celle qui présente le traitement anti-ultraviolets le plus performant.

La présente invention n'est nullement limitée au mode de réalisation décrit et représenté, mais l'homme du métier saura y apporter toute variante conforme à son esprit.

On pourra par exemple prévoir de placer une caméra au-dessus de la lentille du démonstrateur, de manière à pouvoir afficher sur un écran ad hoc les expériences menées au cours des six étapes précitées. Ainsi, un plus grand nombre de personnes pourra observer les résultats de ces expériences.

On pourra également prévoir un compteur permettant de compter le nombre d'utilisations du démonstrateur, de manière que l'utilisateur puisse contrôler que le matériau du verre de lunettes considéré résiste bien au vieillissement.

Selon une autre variante, on pourra prévoir de remplacer la feuille Bristol blanche par une feuille de papier qui contient des azurants optiques. De tels azurants sont des composés bien connus de l'Homme du métier, qui émettent une lumière visible de fluorescence lorsqu'ils sont éclairés par un rayonnement UV. La lumière visible qui est produite par ces composés est donc au moins en partie située dans l'intervalle de longueur d'onde compris entre 380 nm et 780 nm, notamment entre 380 nm et 420 nm, correspondant à une couleur bleue.

Encore en variante, on pourra intégrer la source de lumière ultraviolette directement à l'intérieur du socle creux, en prévoyant un interrupteur à l'extérieur de celui-ci.

Selon d'autres variantes non représentées du démonstrateur, on pourra envisager que le socle creux soit réalisé dans un matériau translucide ou opaque. On pourra également envisager que le socle creux présente une forme parallélépipédique ou encore sphérique.

On pourra aussi envisager que la lentille soit formée de trois matériaux différents ou plus. La lentille pourra également être formée d'un seul et même matériau, auquel cas il ne sera pas possible de comparer les propriétés de deux matériaux différents.

On pourra par ailleurs envisager, comme cela apparaît sur la figure 2, de placer la lentille 20 tête-bêche par rapport à sa position illustrée sur la figure 1, de telle manière que sa face arrière concave soit orientée vers l'avant.

Dans cette variante, on pourra déterminer les propriétés anti-ultraviolets des deux parties de la lentille selon une méthode différente de celle exposée supra.

On utilisera pour cela une feuille de papier 90 de couleur sombre, par exemple noire, sur laquelle seront prévues des inscriptions 91 imprimées à l'encre ultraviolette.

Alors, l'utilisateur retournera le démonstrateur 1 de telle manière que sa lentille 20 soit tournée vers la feuille de papier 90, le démonstrateur étant alors maintenu dans une position où il est incliné entre 30 et 45 degrés par rapport à la verticale.

L'utilisateur éclairera ensuite la lentille 20 avec la lampe UV 60. Il observera ainsi que les réflexions des inscriptions 91 sur la lentille 20 seront moins visibles sur l'une des deux parties 21, 22 de la lentille 20. Cette partie 21, 22 de la lentille 20 sera celle qui présente le traitement anti-ultraviolets le plus performant.

## Revendications

1. Démonstrateur (1) de propriétés d'un matériau de verre de lunettes, comportant :
- un socle creux (10) ouvert sur une fenêtre d'observation (13),
- une lentille (20) qui ferme ladite fenêtre d'observation (13) et qui comporte au moins une partie (21) réalisée dans ledit matériau de verre de lunettes, et
- un élément électrostatique (50) qui est logé librement dans le socle creux (10) et qui est susceptible de se déplacer sous l'action d'une force électrostatique, de façon à former un premier moyens de démonstration,
**caractérisé en ce qu'**il comporte deux autres moyens de démonstration distincts :
- une marque ultraviolette (43) qui est située dans le socle creux (10) de manière à être observable au travers de ladite lentille (20) et qui apparaît lorsqu'elle est éclairée par une lumière ultraviolette,
- un élément abrasif (30) qui est monté mobile sur le socle creux (10) et qui comporte :
- un ressort (32) situé à l'intérieur du socle creux qui est adapté à venir rayer ladite lentille (20), et
- une tige de manoeuvre (31) qui s'étend au travers d'une rainure pratiquée dans le socle creux (10).

2. Démonstrateur (1) selon la revendication précédente, dans lequel ladite lentille (20) présente deux parties (21, 22) distinctes respectivement réalisées dans deux matériaux différents de verre de lunettes.

3. Démonstrateur (1) selon la revendication précédente, dans lequel ladite fenêtre d'observation (13) présente une forme circulaire et dans lequel les deux parties (21, 22) de la lentille (20) sont formées de deux demi-verres de lunettes assemblés.

4. Démonstrateur (1) selon l'une des revendications précédentes, dans lequel ledit socle creux (10) est en partie au moins réalisé dans un matériau transparent.

5. Démonstrateur (1) selon l'une des revendications précédentes, dans lequel le socle creux (10) présente une forme ovoïdale, avec une extrémité dans laquelle est située ladite fenêtre d'observation (13) et une extrémité opposée qui est lestée.

6. Démonstrateur (1) selon l'une des revendications précédentes, qui présente une plus grande dimension inférieure à 75 cm et un poids inférieur à 10 kg, pour être transportable.

7. Démonstrateur (1) selon l'une des revendications précédentes, dans lequel il est prévu une pluralité d'éléments électrostatiques (50) présentant chacun une marque ultraviolette.

8. Utilisation d'un démonstrateur (1) selon l'une des revendications 2 et 3, dans lequel il est prévu une pluralité d'éléments électrostatiques (50) et dans lequel les deux parties (21, 22) de la lentille (20) présentent des traitements antistatique différents, comportant des opérations consistant à :
- orienter le démonstrateur (1) de telle manière que les éléments électrostatiques (50) se répartissent sur chaque partie (21, 22) de la lentille (20),
- retourner le démonstrateur (1),
- observer à laquelle des deux parties (21, 22) de la lentille (20) le plus grand nombre d'éléments électrostatiques (50) adhèrent, et
- en déduire laquelle des deux parties (21, 22) de la lentille (20) présente le traitement antistatique le plus performant.

9. Utilisation d'un démonstrateur (1) selon l'une des revendications 2 et 3, dans lequel il est prévu une marque ultraviolette (43) et dans lequel les deux parties (21, 22) de la lentille (20) présentent des traitements anti-ultraviolets différents, comportant des opérations consistant à :
- éclairer ladite marque ultraviolette (43) au moyen d'une source de lumière ultraviolette (60),
- observer ladite marque ultraviolette (43) au travers de chacune des deux parties (21, 22) de la lentille (20), et
- en déduire laquelle des deux parties (21, 22) de la lentille (20) présente le traitement anti-ultraviolets le plus performant.

10. Utilisation d'un démonstrateur (1) selon l'une des revendications 2 et 3, dans lequel il est prévu un élément abrasif (30) et dans lequel les deux parties (21, 22) de la lentille (20) présentent des traitements anti-abrasion différents, comportant des opérations consistant à :
- passer ledit élément abrasif (30) sur chacune des parties (21, 22) de la lentille (20),
- observer laquelle des deux parties (21, 22) de la lentille (20) présente les rayures les plus apparentes, et
- en déduire laquelle des deux parties (21, 22) de la lentille (20) présente le traitement anti-abrasion le plus performant.

11. Utilisation d'un démonstrateur (1) selon l'une des revendications 2 et 3, dans lequel les deux parties (21, 22) de la lentille (20) présentent des traitements hydrophobes différents, comportant des opérations consistant à :
- verser une goutte de liquide sur chacune des parties (21, 22) de la lentille (20),
- observer sur laquelle des deux parties (21, 22) de la lentille (20) ladite goutte glisse le plus rapidement, et
- en déduire laquelle des deux parties (21, 22) de la lentille (20) présente le traitement hydrophobe le plus performant.

12. Utilisation d'un démonstrateur (1) selon l'une des revendications 2 et 3, dans lequel les deux parties (21, 22) de la lentille (20) présentent des traitements antisalissure différents, comportant des opérations consistant à :
- déposer une empreinte de doigt sur chacune des parties (21, 22) de la lentille (20),
- observer sur laquelle des deux parties (21, 22) de la lentille (20) le doigt a laissé l'empreinte la plus visible, et
- en déduire laquelle des deux parties (21, 22) de la lentille (20) présente le traitement antisalissure le plus performant.

13. Utilisation d'un démonstrateur (1) selon l'une des revendications 2 et 3, dans lequel les deux parties (21, 22) de la lentille (20) présentent des traitements anti-ultraviolets différents, comportant des opérations consistant à :
- positionner le démonstrateur sur une feuille sombre (80) sur laquelle est prévue une marque ultraviolette (91), de telle manière que la lentille (20) soit tournée vers cette feuille sombre (90)
- éclairer ladite lentille (20) au moyen d'une source de lumière ultraviolette (60),
- observer des réflexions de ladite marque ultraviolette (91) sur chacune des deux parties (21, 22) de la lentille (20), et
- en déduire laquelle des deux parties (21, 22) de la lentille (20) présente le traitement anti-ultraviolets le plus performant.

## Patentansprüche

1. Demonstrator (1) für Eigenschaften eines Brillenglasmaterials, umfassend:
- einen Hohlsockel (10), über einem Beobachtungsfenster (13) offen,
- eine Linse (20), die das Beobachtungsfenster (13) schließt und mindestens einen Teil (21) umfasst, der im Brillenglasmaterial ausgeführt ist, und
- ein elektrostatisches Element (50), das im Hohlsockel (10) frei untergebracht ist und unter der Wirkung einer elektrostatischen Kraft beweglich ist, so dass es ein erstes Demonstrationsmittel bildet,
**dadurch gekennzeichnet, dass** er zwei andere unterschiedliche Demonstrationsmittel umfasst:
- eine ultraviolette Markierung (43), die sich derart im Hohlsockel (10) befindet, dass sie durch die Linse (20) beobachtbar ist, und erscheint, wenn sie von einem ultravioletten Licht beleuchtet wird,
- ein Schleifelement (30), das beweglich auf dem Hohlsockel (10) montiert ist und umfasst:
- eine im Innern des Hohlsockels (10) befindliche Feder (32), die dafür geeignet ist, die Linse (20) zu verkratzen, und
- einen Manövrierstab (31), der in einer im Hohlsockel (10) angebrachten Rille verläuft.

2. Demonstrator (1) nach dem vorhergehenden Anspruch, bei dem die Linse (20) zwei unterschiedliche Teile (21, 22) aufweist, die jeweils in den zwei verschiedenen Brillenglasmaterialien ausgeführt sind.

3. Demonstrator (1) nach dem vorhergehenden Anspruch, bei dem das Beobachtungsfenster (13) eine kreisförmige Form aufweist und bei dem die beiden Teile (21, 22) der Linse (20) aus zwei zusammengefügten Brillenhalbgläsern gebildet sind.

4. Demonstrator (1) nach einem der vorhergehenden Ansprüche, bei dem der Hohlsockel (10) wenigstens zum Teil in einem transparenten Material ausgeführt ist.

5. Demonstrator (1) nach einem der vorhergehenden Ansprüche, bei dem der Hohlsockel (10) eine Eiform aufweist, mit einem Ende, in dem sich das Beobachtungsfenster (13) befindet, und einem gegenüberliegenden Ende, das beschwert ist.

6. Demonstrator (1) nach einem der vorhergehenden Ansprüche, der ein geringeres Innenmaß als 75 cm und eine geringeres Gewicht als 10 kg aufweist, um transportierbar zu sein.

7. Demonstrator (1) nach einem der vorhergehenden Ansprüche, in dem eine Vielzahl elektrostatischer Elemente (50) vorgesehen ist, die jeweils eine ultraviolette Markierung aufweisen.

8. Verwendung eines Demonstrators (1) nach einem der Ansprüche 2 und 3, in dem eine Vielzahl elektrostatischer Elemente (50) vorgesehen ist und bei dem die beiden Teile (21, 22) der Linse (20) unterschiedliche Antistatikbehandlungen aufweisen, umfassend Handlungen, die darin bestehen:
- den Demonstrator (1) so auszurichten, dass die elektrostatischen Elemente (50) sich über jeden Teil (21, 22) der Linse (20) verteilen,
- den Demonstrator (1) umzudrehen,
- zu beobachten, an welchem der beiden Teile (21, 22) der Linse (20) die größte Anzahl der elektrostatischen Elemente (50) haften bleibt, und
- daraus abzuleiten, welcher der beiden Teile (21, 22) der Linse (20) die leistungsfähigere Antistatikbehandlung aufweist.

9. Verwendung eines Demonstrators (1) nach einem der Ansprüche 2 und 3, bei dem eine ultraviolette Markierung (43) vorgesehen ist und bei dem die beiden Teile (21, 22) der Linse (20) verschiedene UV-Schutzbehandlungen aufweisen, umfassend Handlungen, die darin bestehen:
- die ultraviolette Markierung (43) mittels einer ultravioletten Lichtquelle (60) zu beleuchten,
- die ultraviolette Markierung (43) durch jeden der beiden Teile (21, 22) der Linse (20) zu betrachten und
- daraus abzuleiten, welcher der beiden Teile (21, 22) der Linse (20) die leistungsfähigere UV-Schutzbehandlung aufweist.

10. Verwendung eines Demonstrators (1) nach einem der Ansprüche 2 und 3, in dem ein Schleifelement (30) vorgesehen ist und bei dem die beiden Teile (21, 22) der Linse (20) verschiedene Kratzschutzbehandlungen aufweisen, umfassend Handlungen, die darin bestehen:
- das Schleifelement (30) über jeden der Teile (21, 22) der Linse (20) zu führen,
- zu beobachten, welcher der beiden Teile (21, 22) der Linse (20) die sichtbarsten Kratzer aufweist, und
- daraus abzuleiten, welcher der beiden Teile (21, 22) der Linse (20) die leistungsfähigere Kratzschutzbehandlung aufweist.

11. Verwendung eines Demonstrators (1) nach einem der Ansprüche 2 und 3, bei dem die beiden Teile (21, 22) der Linse (20) verschiedene hydrophobe Behandlungen aufweisen, umfassend Handlungen, die darin bestehen:
- einen Tropfen Flüssigkeit auf jeden der Teile (21, 22) der Linse (20) zu gießen,
- zu beobachten, auf welcher der beiden Teile (21, 22) der Linse (20) der Tropfen am schnellsten gleitet und
- daraus abzuleiten, welcher der beiden Teile (21, 22) der Linse (20) die leistungsfähigere hydrophobe Behandlung aufweist.

12. Verwendung eines Demonstrators (1) nach einem der Ansprüche 2 und 3, bei dem die beiden Teile (21, 22) der Linse (20) verschiedene Schmutzschutzbehandlungen aufweisen, umfassend Handlungen, die darin bestehen:
- einen Fingerabdruck auf jeden der Teile (21, 22) der Linse (20) aufzubringen,
- zu beobachten, auf welchem der beiden Teile (21, 22) der Linse (20) der Finger den sichtbarsten Abdruck hinterlassen hat, und
- daraus abzuleiten, welcher der beiden Teile (21, 22) der Linse (20) die leistungsfähigere Schmutzschutzbehandlung aufweist.

13. Verwendung eines Demonstrators (1) nach einem der Ansprüche 2 und 3, bei dem die beiden Teile (21, 22) der Linse (20) verschiedene UV-Schutzbehandlungen aufweisen, umfassend Handlungen, die darin bestehen:
- den Demonstrator auf ein dunkles Blatt (80) zu legen, auf dem eine ultraviolette Markierung (91) vorgesehen ist, so dass die Linse (20) zu diesem dunklen Blatt (90) hin gedreht ist,
- die Linse (20) mittels einer ultravioletten Lichtquelle (60) zu beleuchten,
- die Reflexionen der ultravioletten Markierung (91) über jeden der beiden Teile (21, 22) der Linse zu beobachten und
- daraus abzuleiten, welcher der beiden Teile (21, 22) der Linse (20) die leistungsfähigere UV-Schutzbehandlung aufweist.

## Claims

1. A demonstrator (1) of properties of a spectacle eyeglass material, comprising:
- a hollow holder (10) apertured with an observation window (13);
- a lens (20) that closes said observation window (13) and that comprises at least one portion (21) made from said spectacle eyeglass material; and
- an electrostatic element (50) that is freely housed in the hollow holder (10) and that is capable of moving under the action of an electrostatic force, in order to form a first demonstrating mean;
**characterized in that** it comprises two other distinct demonstrating means:
- an ultraviolet mark (43) that is located in the hollow holder (10) so as to be observable through said lens (20) and that appears when it is illuminated with ultraviolet light; and
- an abrasive element (30) that is movably mounted on the hollow holder (10) and that comprises :
- a spring (32) situated into the hollow holder (10) and that is suitable for scratching said lens (20); and
- a maneuvering rod (31) protruding through a groove that is arranged in the hollow holder (10).

2. The demonstrator (1) as claimed in the preceding claim, in which said lens (20) has two distinct portions (21, 22) made from two different spectacle eyeglass materials, respectively.

3. The demonstrator (1) as claimed in the preceding claim, in which said observation window (13) is circular in shape and in which the two portions (21, 22) of the lens (20) are formed from two half spectacle eyeglasses that are joined together.

4. The demonstrator (1) as claimed in one of the preceding claims, in which said hollow holder (10) is at least partially made of a transparent material.

5. The demonstrator (1) as claimed in one of the preceding claims, in which the hollow holder (10) has an ovoid shape, with an end in which said observation window (13) is located and an opposite end that is ballasted.

6. The demonstrator (1) as claimed in one of the preceding claims, which has a largest dimension smaller than 75 cm and a weight lower than 10 kg, in order to be transportable.

7. The demonstrator (1) as claimed in one of the preceding claims, in which provision is made for a plurality of electrostatic elements (50) each comprising an ultraviolet mark.

8. The use of a demonstrator (1) as claimed in one of claims 2 and 3, in which provision is made for a plurality of electrostatic elements (50) and in which the two portions (21, 22) of the lens (20) have different antistatic treatments, comprising operations consisting in:
- orienting the demonstrator (1) in such a way that the electrostatic elements (50) are distributed over each portion (21, 22) of the lens (20);
- righting the demonstrator (1);
- observing to which of the two portions (21, 22) of the lens (20) the largest number of electrostatic elements (50) adhere; and
- deducing therefrom which of the two portions (21, 22) of the lens (20) has the highest-performing antistatic treatment.

9. The use of a demonstrator (1) as claimed in one of claims 2 and 3, in which provision is made for an ultraviolet mark (43) and in which the two portions (21, 22) of the lens (20) have different anti-ultraviolet treatments, comprising operations consisting in:
- illuminating said ultraviolet mark (43) by means of an ultraviolet light source (60);
- observing said ultraviolet mark (43) through each of the two portions (21, 22) of the lens (20); and
- deducing therefrom which of the two portions (21, 22) of the lens (20) has the highest-performing anti-ultraviolet treatment.

10. The use of a demonstrator (1) as claimed in one of claims 2 and 3, in which provision is made for an abrasive element (30) and in which the two portions (21, 22) of the lens (20) have different anti-abrasion treatments, comprising operations consisting in:
- passing said abrasive element (30) over each of the portions (21, 22) of the lens (20);
- observing which of the two portions (21, 22) of the lens (20) is the most visibly scratched; and
- deducing therefrom which of the two portions (21, 22) of the lens (20) has the highest-performing anti-abrasion treatment.

11. The use of a demonstrator (1) as claimed in one of claims 2 and 3, in which the two portions (21, 22) of the lens (20) have different hydrophobic treatments, comprising operations consisting in:
- placing a droplet of liquid on each of the portions (21, 22) of the lens (20);
- observing over which of the two portions (21, 22) of the lens (20) said droplet slides most rapidly; and
- deducing therefrom which of the two portions (21, 22) of the lens (20) has the highest-performing hydrophobic treatment.

12. The use of a demonstrator (1) as claimed in one of claims 2 and 3, in which the two portions (21, 22) of the lens (20) have different anti-smudge treatments, comprising operations consisting in:
- placing a fingerprint on each of the portions (21, 22) of the lens (20);
- observing on which of the two portions (21, 22) of the lens (20) the finger left the most visible print; and
- deducing therefrom which of the two portions (21, 22) of the lens (20) has the highest-performing anti-smudge treatment.

13. The use of a demonstrator (1) as claimed in one of claims 2 and 3, in which the two portions (21, 22) of the lens (20) have different anti-ultraviolet treatments, comprising operations consisting in:
- positioning the demonstrator on a dark sheet (80) on which an ultraviolet mark (91) is provided, in such a way that the lens (20) is turned toward this dark sheet (90);
- illuminating said lens (20) by means of an ultraviolet light source (60);
- observing reflections of said ultraviolet mark (91) from each of the two portions (21, 22) of the lens (20); and
- deducing therefrom which of the two portions (21, 22) of the lens (20) has the highest-performing anti-ultraviolet treatment.
